# EUROPEAN PATENT APPLICATION

(11) **EP 1 770 257 A2**
(43) Date of publication of application: **04.04.2007**
(21) Application number: 06020338.7
(22) Date of filing: 28.09.2006
(51) Int. Cl.: F02B 23/10, F02M 21/02, F02B 43/10, F02F 1/10, F02B 75/02

(54) **Fuel injection internal combustion engine**

(30) Priority: 29.09.2005 IT MI20051822
(71) Applicant: Centre de Recherche en Machines Thermiques, 69570 Dardilly Lyon (FR)
(72) Inventor: Artioli, R., Automotive Research Tech. & Style SRL, 34121 Trieste TS (IT)
(74) Representative: Simino, Massimo

(57) **Abstract**

The present invention concerns an internal combustion engine which is characterized in that it has a through hole (14) in the side wall (7) of the cylinder (3) wherein an injector (13) is provided in fluid communication with the through hole (14) for injecting a predetermined amount of fuel through said through hole (14) into the cylinder (3).

## Description

The present invention relates to an internal combustion engine, particularly but without limitation a direct injection internal combustion engine, which is adapted to be also/only supplied with a gaseous fuel, according to the preamble of claim 1.

For simplicity, reference will be particularly made herein, without limitation, to an automotive four-cycle direct injection internal combustion (IC) engine, which is adapted to be supplied with a gaseous fuel.

The term "direct injection" as used herein is intended to define the use of fuel injectors for direct injection of fuel into the combustion chamber of an IC engine.

The term "gaseous fuel" as used herein relates to both compressed gaseous fuel, such as compressed natural gas (CNG, methane) or hydrogen (H2), and liquefied gaseous fuel, such as liquefied petroleum gas (LPG).

The use of gaseous fuel in IC engines instead of the more commonly used liquid fuel (gasoline or diesel oil) is known to be more environment-friendly and cost effective.

The use of gaseous fuel is particularly desired in response to the increasingly restrictive antipollution standards, as pollutant emissions in gaseous-fueled engine exhaust are considerably lower than those of a comparable liquid-fueled engine.

In prior art indirect injection IC engines, there is provided that gaseous fuel, such as methane, is drawn from a tank, in which it is stored at a pressure of about 220 bars and is decompressed to a pressure of about 9 bars in the intake manifold, where specially developed injectors are located.

Such injectors are usually controlled by an electronic control unit (ECU), which adjusts various operation parameters as a function of the data detected by a lambda sensor. For instance, the ECU adjusts the spark advance, which generally has to be increased by about ten degrees with respect to characteristic values used in gasoline injectors.

Gaseous fuel injectors differ from liquid fuel injectors in that they have ejector nozzles with through orifices or holes whose sections are ten times as large.
This is needed because the required amount of gaseous fuel for the combustion to take place has to pass in a short time.

It shall be noted that, since the fuel is in gaseous form, the volumes thereof are about ten times as large as those of gasoline injection systems or diesel engine injection systems, whereby an injector is needed whose nozzle has much larger holes than in a gasoline or diesel oil injection device.

In recent times, the efficiency of gaseous fueled IC engines has been further improved by direct injection, i.e. the use of injectors that can inject fuel directly into the combustion chamber of the IC engine.

Nevertheless, the introduction of such technology in gaseous fueled IC engines involves a number of problems, including:
I) the need of using an injector having one or more orifices with a larger diameter than that of liquid fuel injectors is seriously limited by the maximum back pressure in the combustion chamber of the cylinder; and
II) The need of disposing the injector in the IC engine cylinder head causes the heat level of the injector to be difficultly controlled, as gaseous fuel has a much lower cooling power than liquid fuel.

In response to the former problem, the prior art has provided the use of injectors having a controlled valve that can open/close the nozzle holes even at high back pressures, to prevent exhaust gases from being recirculated into the injector.

This involves a considerable energy waste, and further requires more complex IC engine supply arrangements.

This invention is based on the issue of providing a direct injection IC engine which has such structural and functional characteristics as to fulfill the above needs, while obviating the above prior art drawbacks.

This issue is addressed by an internal combustion engine according to the features of claim 1.

Thanks to the present invention, a direct injection IC engine may be provided in which gaseous fuel is directly injected into the combustion chambers of the engine and fewer mechanical components are required.

Furthermore, the present invention allows a more accurate control of the amount of injected gaseous fuel as compared with prior art IC engines, as the outlet holes of the injectors are so oriented as to optimize the stratification of the gaseous fuel charge in the combustion chamber and to allow operation with a lean mixture.

Finally, it provides a more effective control of the injector temperature as compared with prior art engines, thanks to the specific injector position.

Further features and advantages of the direct injection internal combustion engine of this invention will be apparent from the following description of one preferred embodiment thereof, which is given by way of illustration and without limitation with reference to the accompanying figures, in which:
- Figure 1 is a schematic simplified plan view of an internal combustion engine according to the invention with the piston at top dead center, and
- Figure 2 shows the engine of Figure 1 with the piston at bottom dead center.

Referring to the accompanying figures, numeral 1 generally designates a direct injection internal combustion engine according to the invention.

In this example, the engine 1 is a single-cylinder controlled ignition internal combustion engine, which is designed to be supplied with gaseous fuel.

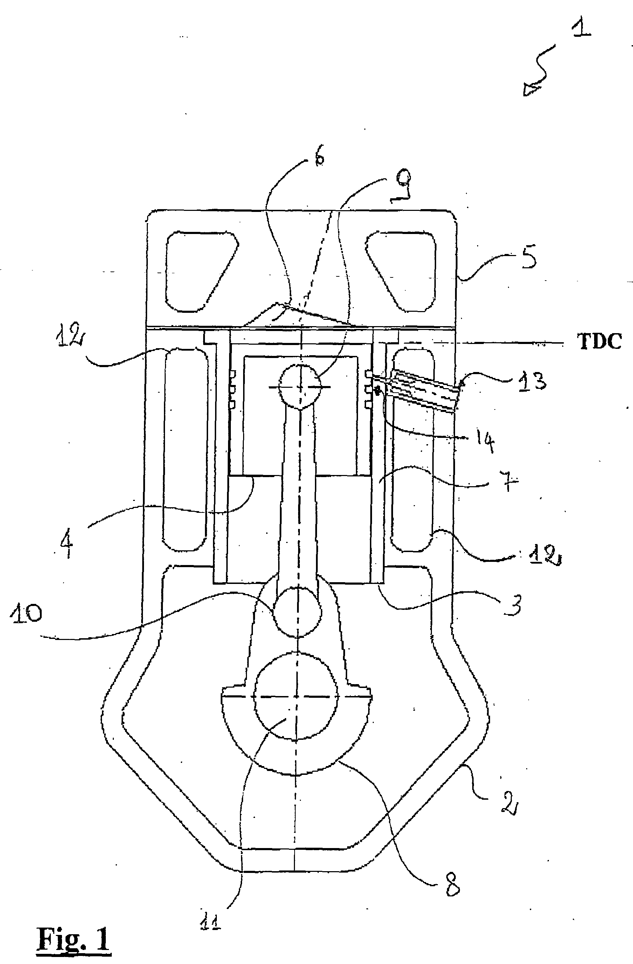

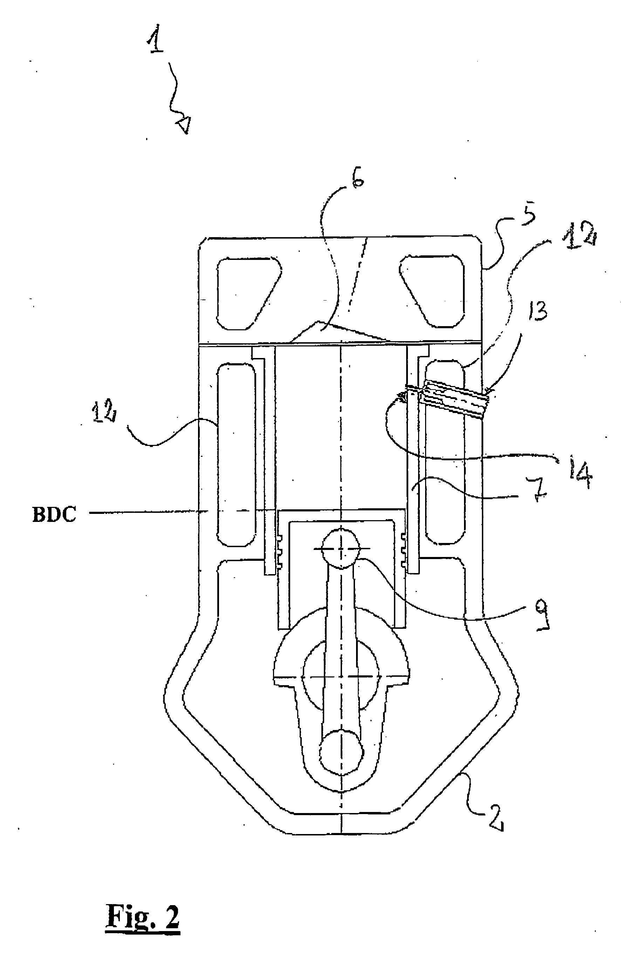

The engine 1 comprises:
- an engine block 2, containing a cylinder 3 defined by a side wall 7,
- a piston 4, which is slidingly and sealingly coupled within the cylinder 3,
- actuating means for reciprocating the piston 4 in the cylinder 3 between a bottom dead center BDC (Fig. 2) and a top dead center TDC (Fig. 1),
- a cylinder head 5, which is associated to the engine block in such a manner as to close the top end of the cylinder 3.

The cylinder head 5, the piston 4 and the cylinder 3 define a combustion chamber 6 in the engine 1.

In the illustrated example, the combustion chamber 6 is defined by a cavity within the cylinder head 5, such cavity being closed at its bottom by the piston crown 4 when the latter reaches top dead center TDC (Fig. 1).

Conversely, when the piston is near bottom dead center BDC, the combustion chamber 6 is also limited by a portion of the side wall 7 of the cylinder 3.

This is because combustion of the mixture within the combustion chamber 6 is still taking place during the initial portion of the stroke of the piston 4 from top dead center TDC to bottom dead center BDC.

In a wholly conventional manner, the above actuating means comprise an ordinary crank gear comprising a rod S having its small end connected to the piston 4 by means of a pin 9 and the big end connected to the crank 10 of a crank shaft 11.

The IC engine 1 has a cooling circuit (not shown) whose function is to maintain the components of the IC engine 1 at an optimized temperature.

In the preferred embodiment, the cooling circuit uses a liquid, i.e. a special liquid is provided which is permanently circulated by a pump.

Therefore, a cylinder liner 12 is provided in the block 2, for circulation of the cooling liquid.

The cylinder liner 12 is placed against the side wall 7 of the cylinder 3. The engine 1 further comprises:
- air inlet and/or intake means (not shown) for introducing air into the combustion chamber 6,
- means for discharging exhaust gases from the combustion chamber 6 (non shown),
- means for controlling air/fuel mixture ignition (not shown) in the combustion chamber 6.

These means are known per se by those of ordinary skill in the art and will not be further described below. For simplicity, they have been omitted in the Figures.

Also, the engine 1 comprises means for introducing fuel into the combustion chamber.

Particularly, these means comprise an injector 13 which is preferably located within the side wall 7 of the cylinder 3. As shown by the exemplary embodiment as shown in the accompanying figures, a through hole 14 is formed in the side wall 7 of the cylinder 3. In accordance with a characteristic aspect of this invention, the injector 13 is disposed within the engine 1 in such a position as to be in fluid communication with said hole 4, so that a predetermined amount of fuel may be injected into the cylinder 3 through the hole 14.

Advantageously, the through hole 14 is formed in a predetermined position in the side wall 7 of the cylinder 3 so as to ensure compatibility with the maximum allowed pressure that can be withstood by the injector 13, while ensuring an effective injection step.

Particularly, the nozzle of such injector 13 is placed within said through hole 14.

It shall be noted that the nozzle of said injector 13 is of the type having a plurality of outlet channels, to effectively optimize stratification of gaseous fuel with air, thereby providing enhanced combustion and allowing lean mixture operation.

Particularly referring to Figure 1, it will be appreciated that, when the piston 4 reaches top dead center TDC, fluid communication between said hole 14 and said combustion chamber 6 is interrupted.

As the piston 4 reaches top dead center TDC, it covers the through hole 14. This provides the advantage of protecting the injector 13 during the initial stage of combustion.

In other words, the injector 13 is isolated during combustion of the mixture, i.e. gaseous fuel with air, within the combustion chamber 6, whereby the injector will not be required to withstand the high pressures generated within the combustion chamber.

Thanks to its advantageous position, the injector 13 is not directly exposed to the pressure and temperature attained in the combustion chamber 6 after combustion of the mixture.

Thus, there is no need to use injectors having a special valve for opening/closing the holes of the outlet nozzle.

Conveniently, during the initial stage in which gaseous fuel is injected into the combustion chamber 6, the piston 4 covers the through hole 14, thereby protecting the injector 13 during combustion of the mixture.

Referring to the accompanying figures, it will be appreciated that the injector 13 is in such position as to be at least partly accommodated in said cylinder liner 12. In a preferred embodiment of the present invention, the injector 13 extends through the cylinder liner 12.

As mentioned above, during combustion within the combustion chamber 6, high temperatures are attained, in addition to high pressures.

When the piston 4 covers the through hole 14, i.e. when it reaches said top dead center TDC, the injector 13 is in such position within the IC engine 1 as to be protected during the initial stage of combustion in said combustion chamber 6.

This further assists cooling of the injector 13.

As clearly shown in the above description, a direct injection IC engine according to the present invention fulfills the above mentioned needs and also obviates prior art drawbacks as set out in the introduction of this disclosure.

Those skilled in the art will obviously appreciate that a number of changes and variants may be made to the direct injection reciprocating combustion engine as described hereinbefore, without departure from the scope of the invention, as defined in the following claims.

## Claims

1. Internal combustion engine, comprising:
- an engine block (2), having at least one cylinder (3) defined by a side wall (7),
- a piston (4), which is slidingly and sealingly coupled within said cylinder (3),
- actuating means (8, 9, 10, 11) for reciprocating said piston (4) in its cylinder (3) between a bottom dead center and a top dead center,
- a cylinder head (5) for closing said at least one cylinder (3) at its top,
- a combustion chamber (6), defined by said cylinder head (5) and by said piston (4) and said cylinder (3),
- means for introducing air into said combustion chamber (6),
- means for introducing fuel into said combustion chamber (6), and
- means for discharging exhaust gases from said combustion chamber (6),
wherein said means for introducing fuel into said combustion chamber (6) comprise an injector (13),
**characterized in that** said side wall (7) of the cylinder (3) has a through hole (14) and that said injector (13) is located in said engine (1) in such a position as to be in fluid communication with said through hole (14) for injecting a predetermined amount of fuel through said through hole (14) into said cylinder (3).

2. An internal combustion engine as claimed in claim 1, wherein when said piston (4) reaches said top dead center (TDC) the piston (4) interrupts fluid communication between said through hole (14) and said combustion chamber (6).

3. An internal combustion chamber as claimed in claim 1 or 2, wherein said piston (4) covers said through hole (14) when it reaches said top dead center (TDC), in such a manner as to protect said injector (13) during the initial stage of combustion in said combustion chamber (6).

4. An internal combustion engine as claimed in any one of claims 1 to 3, wherein:
- said engine has a cylinder liner (12) for the cooling liquid, which is placed against the side wall (7) of the cylinder (3) and
- said injector (13) is in such position as to be at least partly accommodated in said cylinder liner (12).

5. An internal combustion chamber as claimed in claim 4, wherein said injector (13) extends through said cylinder liner (12).

6. An internal combustion chamber as claimed in any one of claims 1 to 5, wherein the nozzle of said injector (13) is placed within said through hole (14).

7. An internal combustion engine as claimed in any one of claims 1 to 6, wherein said injector (13) is a gaseous fuel injector.

8. An internal combustion engine as claimed in claim 7, **characterized in that** said gaseous fuel is compressed natural gas (CNG, methane), hydrogen (H₂) or liquefied petroleum gas (LPG).

9. An internal combustion engine as claimed in any preceding claim, **characterized** it further comprises ignition means for causing combustion in said combustion chamber (6).

10. A method of operating a direct injection internal combustion engine as claimed in any one of claims 1 to 9, **characterized in that** it comprises the step of injecting a predetermined amount of fuel into said cylinder (3) through a through hole (14) formed in the side wall (7) of the cylinder (3).

11. A method as claimed in claim 10, wherein said fuel injection step occurs at the end of the step in which air is introduced into said cylinder (3).

12. A method as claimed in claim 10 or 11, wherein said fuel injection step occurs before the piston (4) reaches top dead center.

13. A method as claimed in claim 10, 11 or 12, further comprising the step of covering said through hole (14) with the piston (4) during the initial step of injection of gaseous fuel into the combustion chamber (6).
